(19) Europäisches Patentamt / European Patent Office / Office européen des brevets

(11) **EP 3 708 708 A1**

(12) **EUROPEAN PATENT APPLICATION**
published in accordance with Art. 153(4) EPC

(43) Date of publication:
**16.09.2020 Bulletin 2020/38**

(51) Int Cl.:
***D06N 3/00*** *(2006.01)*

(21) Application number: **18858469.2**

(22) Date of filing: **31.08.2018**

(86) International application number:
**PCT/JP2018/032292**

(87) International publication number:
**WO 2019/058924 (28.03.2019 Gazette 2019/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.09.2017 JP 2017182994**

(71) Applicant: **Kuraray Co., Ltd.**
**Kurashiki-shi, Okayama 710-0801 (JP)**

(72) Inventors:
• **MEGURO, Masashi**
**Okayama-shi**
**Okayama 702-8045 (JP)**
• **HISHIDA, Hiroyuki**
**Okayama-shi**
**Okayama 702-8045 (JP)**

(74) Representative: **Vossius & Partner**
**Patentanwälte Rechtsanwälte mbB**
**Siebertstrasse 3**
**81675 München (DE)**

(54) **NAPPED ARTIFICIAL LEATHER**

(57) Disclosed is a napped artificial leather including: a non-woven fabric obtained by entangling fibers; and an elastic polymer, wherein a 100% modulus (A) of the elastic polymer and a content (B) of the elastic polymer satisfy the relational expression: $B \geq -1.8A + 40$, $A > 0$, and the non-woven fabric has an abrasion loss (C) of 45 mg or less, in accordance with JIS L 1096 (6.17.5E method, Martindale method) under a pressing load of 12 kPa (gf/cm$^2$) after 20000 abrasion cycles.

FIG. 1

EP 3 708 708 A1

**Description**

[Technical Field]

The present invention relates to a napped artificial leather that can be suitably used as a surface material for clothing, shoes, articles of furniture, car seats, general merchandise, and the like.

[Background Art]

Conventionally, napped artificial leathers such as a suede-like artificial leather and a nubuck-like artificial leather are known. Napped artificial leathers have a napped surface including napped fibers that is formed by napping one surface of a non-woven fabric into which an elastic polymer has been impregnated. Such napped artificial leathers are required to have abrasion resistance.
As for the abrasion resistance of napped artificial leathers, for example, PTL 1 listed below discloses a suede-like artificial leather obtained by extracting, in a sheet-like material for leathers that includes ultrafine fibers and an elastic polymer, one component of a fiber mixture after applying the elastic polymer into the sheet-like material, and thereafter applying the elastic polymer again. PTL 2 listed below discloses a flexible artificial leather having good abrasion resistance: The artificial leather is obtained by adding, into a non-woven sheet-like material including, as a surface fiber layer, a fiber layer made of ultrafine fibers with a single fiber fineness of 0.5 deniers or less, a treating liquid obtained by dissolving and mixing inorganic salts into an aqueous polyurethane emulsion with an average emulsion particle size of 0.1 to 2.0 $\mu$m, and thereafter drying the sheet-like material under heating. PTL 3 listed below discloses an artificial leather obtained by forming an artificial leather substrate, and thereafter swelling an elastic polymer with a solvent, followed by compression, thus bonding ultrafine fibers and the elastic polymer together.

[Citation List]

[Patent Literatures]

[PTL 1] Japanese Laid-Open Patent Publication No. S51-75178
[PTL 2] Japanese Laid-Open Patent Publication No. H06-316877
[PTL 3] Japanese Laid-Open Patent Publication No. 2001-81677

[Summary of Invention]

[Technical Problem]

The suede-like artificial leather disclosed in PTL 1 is problematic in that, although the abrasion resistance has been improved, the texture of the artificial leather is hard because the elastic polymer constrains the ultrafine fibers. Similarly, the artificial leather disclosed in PTL 2 is problematic in that, although the abrasion resistance has been improved, the texture of the artificial leather is hard. Furthermore, the artificial leather disclosed in PTL 3 is also problematic in that, because the elastic polymer constrains the ultrafine fibers, the texture of the artificial leather becomes hard if the abrasion resistance is to be sufficiently improved.
It is an object of the present invention to provide a napped artificial leather having both a flexible texture and high abrasion resistance as a result of solving the above-described problems.

[Solution to Problem]

An aspect of the present invention is directed to a napped artificial leather including: a non-woven fabric that is an entangle body of fibers; and an elastic polymer that has been applied into the non-woven fabric, wherein at least one surface of the napped artificial leather is a napped surface formed by napping the fibers, a 100% modulus (A) of the elastic polymer and a content (mass%) (B) of the elastic polymer satisfy the relational expression: B ≥ -1.8A + 40, A > 0, and the non-woven fabric has an abrasion loss (C) of 45 mg or less, in accordance with JIS L 1096 (6.17.5E method, Martindale method) under a pressing load of 12 kPa (gf/cm$^2$) after 20000 abrasion cycles. Such a napped artificial leather provides a napped artificial leather having both a flexible texture and high abrasion resistance.

[Advantageous Effects of Invention]

According to the present invention, it is possible to provide a napped artificial leather having both a flexible texture and high abrasion resistance.

[Brief Description of Drawings]

[FIG. 1] FIG. 1 is a graph plotting a relationship between the 100% modulus (A) of an elastic polymer and the content (B) of the elastic polymer for napped artificial leathers obtained in Examples 1 to 7 and Comparative Examples 1 to 4.
[FIG. 2] FIG. 2 is a graph plotting a relationship between the 100% modulus (A) of an elastic polymer and the content (B) of the elastic polymer for napped artificial leathers obtained in Examples 8 to 11 and Comparative Examples 5 to 7.

[Description of Embodiment]

A napped artificial leather according to the present embodiment is a napped artificial leather including: a non-woven fabric that is an entangle body of fibers; and an elastic polymer that has been applied into the non-woven fabric, wherein at least one surface of the napped artificial leather is a napped surface formed by napping the fibers, a 100% modulus (A) of the elastic polymer and a content (mass%) (B) of the elastic polymer satisfy the relational expression: $B \geq -1.8A + 40$, $A > 0$, and the non-woven fabric has an abrasion loss (C) of 45 mg or less, in accordance with JIS L 1096 (6.17.5E method, Martindale method) under a pressing load of 12 kPa (gf/cm$^2$) after 20000 abrasion cycles. Hereinafter, a napped artificial leather according to the present embodiment will be described in detail, in conjunction with a production method thereof.

It is particularly preferable that the non-woven fabric obtained by entangling fibers is a non-woven fabric of ultrafine fibers. In the present embodiment, a description will be given in detail of a case where a non-woven fabric of ultrafine fibers is used, which is obtained, for example, by subjecting ultrafine fiber-generating fibers such as island-in-the-sea (matrix-domain) composite fibers to an entangling treatment, and then to an ultrafine fiber-generating treatment. Note that, as the ultrafine fibers, fibers derived from ultrafine fiber-generating fibers other than the island-in-the-sea composite fibers may be used, or it is possible to use fibers obtained by directly spinning ultrafine fibers without using ultrafine fiber-generating fibers. In the following, a case where island-in-the-sea composite fibers are used will be described in detail.

Examples of the protuction method of a non-woven fabric obtained by entangling ultrafine fibers include a method in which island-in-the-sea composite fibers are melt spun to produce a web, and the web is subjected to an entangling treatment, and thereafter the sea component is selectively removed from the island-in-the-sea composite fibers, to form ultrafine fibers. In any of the processes until the sea component of the island-in-the-sea composite fibers is removed to form ultrafine fibers, a fiber shrinking treatment such as a heat shrinking treatment using water vapor or hot water, or dry-heating may be performed to densify the island-in-the-sea composite fibers.

Examples of the production method of the web include a method in which filaments of the island-in-the-sea composite fibers that have been spun are collected on a net by spunbonding or the like, without being cut, to form a filament web, and a method in which filaments are cut into staples to form a staple web. Among these, it is particularly preferable to use a filament web in that the entangled state can be easily adjusted and a high level of fullness can be achieved. In addition, the formed web may be subjected to a fusion bonding treatment in order to impart shape stability thereto. In the following, an example in which filaments of island-in-the-sea composite fibers are used will be described in detail.

Note that the filament means a continuous fiber, rather than a staple that has been intentionally cut after being spun. More specifically, the filament means a filament or a continuous fiber other than a staple that has been intentionally cut so as to have a fiber length of about 3 to 80 mm, for example. The fiber length of the island-in-the-sea composite fibers before being subjected to the ultrafine fiber generation is preferably 100 mm or more, and may be several meters, several hundred meters, several kilometers, or more, as long as the fibers are technically producible and are not inevitably cut during the production process. Note that some of filaments may be inevitably cut into staples during the production process by needle punching during entanglement, or surface buffing.

The type of the ultrafine fibers that form the non-woven fabric is not particularly limited. Specific examples thereof include fibers of aromatic polyesters such as polyethylene terephthalate (PET), modified PETs such as isophthalic acid-modified PET, sulfoisophthalic acid-modified PET and cationic dye-dyeable modified PET, polybutylene terephthalate, and polyhexamethylene terephthalate; aliphatic polyesters such as polylactic acid, polyethylene succinate, polybutylene succinate, polybutylene succinate adipate, and a polyhydroxybutyrate-polyhydroxyvalerate resin; nylons such as nylon 6, nylon 66, nylon 10, nylon 11, nylon 12, and nylon 6-12; and polyolefins such as polypropylene, polyethylene, polybutene, polymethylpentene, and a chlorine-based polyolefin. Note that a modified PET is a PET obtained by substituting at least a portion of an ester-forming dicarboxylic acid-based monomer unit or a diol-based monomer unit of an unmodified PET with a monomer unit capable of substituting these units. Specific examples of the modified monomer unit capable of substituting the dicarboxylic acid-based monomer unit include units derived from an isophthalic acid, a sodium sulfoisophthalic acid, a sodium sulfonaphthalene dicarboxylic acid, and an adipic acid that are capable of substituting a terephthalic acid unit. Specific examples of the modified monomer unit capable of substituting a diol-based monomer unit include units derived from diols, such as a butane diol and a hexane diol, that are capable of substituting an ethylene glycol unit.

Although the average fineness of the fibers is not particularly limited, it is particularly preferable that the fibers are ultrafine fibers having an average fineness of 0.05 to 1.0 dtex, more preferably 0.07 to 0.5 dtex, because a flexible texture can be easily obtained due to a reduced rigidity of the fibers. When the average fineness of the fibers is too low, the texture becomes flexible, but the abrasion resistance tends to be reduced. Note that the average fineness is determined by imaging a cross section of the napped artificial leather that is parallel to the thickness direction thereof using a scanning electron microscope (SEM) at a magnification of 3000X, and calculating an average value of the diameters of evenly selected 15 fibers by using the densities of the resins that form the fibers.

If necessary, for example, dark-color pigments such as carbon black, white pigments such as zinc white, white lead, lithopone, titanium dioxide, precipitated barium sulfate and barytes powder, a weathering agent, an antifungal agent, a hydrolysis inhibitor, a lubricant, fine particles, a frictional resistance adjustor, and the like may be blended in the fibers, as long as the effects of the present invention are not impaired.

Examples of the entangling treatment include a method in which a plurality of layers of filament webs are superposed in the thickness direction by using a cross lapper or the like, and are subsequently subjected to needle punching simultaneously or alternately from both surfaces such that at least one barb penetrates the web or high-pressure water jetting. The punching density of the needle punching is preferably about 1500 to 5500 punch/cm$^2$, more preferably about 2000 to 5000 punch/cm$^2$, because high abrasion resistance can be easily achieved. When the punching density is too low, the abrasion resistance tends to be reduced. When the punching density is too high, the fibers tend to be cut, resulting in a reduced degree of entanglement.

An oil, an antistatic agent, and the like may be added to the filament web in any stage from the spinning step to the entangling treatment of the island-in-the-sea composite fibers. Furthermore, if necessary, the entangled state of the filament web may be densified in advance by performing a shrinking treatment in which the filament web is immersed in hot water at about 70 to 150°C. The basis weight of the entangled web thus obtained is preferably in the range of about 100 to 2000 g/m$^2$. Furthermore, if necessary, the entangled web may be subjected to a treatment for further increasing the fiber density and the degree of entanglement by heat shrinking the entangled web. For the purpose of, for example, further densifying the entangled web that has been densified by the heat-shrinking treatment, fixing the shape of the entangled web, and smoothing the surface thereof, the fiber density may be further increased by performing hot pressing as needed.

In the production of the napped artificial leather, an elastic polymer is impregnated into the non-woven fabric obtained by entangling the island-in-the-sea composite fibers, in order to impart shape stability and fullness to the non-woven fabric. Specific examples of the elastic polymer include polyurethanes, acrylonitrile elastomers, olefin elastomers, polyester elastomers, polyamide elastomers, and acrylic elastomers. Among these, polyurethanes are particularly preferable. Specific examples of the polyurethane include polycarbonate urethane, polyether urethane, polyester urethane, polyether ester urethane, polyether carbonate urethane, and polyester carbonate urethane. The polyurethane may be a polyurethane (solvent-based polyurethane) obtained by impregnating, into the non-woven fabric, a solution in which the polyurethane is dissolved in a solvent such as N,N-dimethylformamide (DMF), and thereafter solidifying the polyurethane by wet solidification, or may be a polyurethane (aqueous polyurethane) obtained by impregnating, into the non-woven fabric, an emulsion in which the polyurethane is dispersed in water, and thereafter solidifying the polyurethane by drying. The solvent-based polyurethane is particularly preferable in that the flexible texture is less likely to be reduced because the polyurethane can be suitably dissociated with the fibers even if the polyurethane amount is increased.

Note that a colorant such as a pigment (e.g., carbon black) or a dye, a coagulation regulator, an antioxidant, an ultraviolet absorber, a fluorescent agent, an antifungal agent, a penetrant, an antifoaming agent, a lubricant, a water-repellent agent, an oil-repellent agent, a thickener, a filler, a curing accelerator, a foaming agent, a water-soluble polymer compound such as polyvinyl alcohol or carboxymethyl cellulose, inorganic fine particles, and a conductive agent may be blended in the elastic polymer, as long as the effects of the present invention are not impaired.

The 100% modulus (A) of the elastic polymer is preferably 4 to 15 MPa, more preferably 4.5 to 12.5 MPa, because a napped artificial leather that is well-balanced in the abrasion resistance and the flexible texture can be easily obtained.

The content (B) of the elastic polymer that has been impregnated into the non-woven fabric in the napped artificial leather is preferably 13 to 50 mass%, more preferably 15 to 45 mass%, particularly preferably 20 to 45 mass%, because a napped artificial leather that is well-balanced in the abrasion resistance and the flexible texture can be easily obtained.

By removing the sea component polymer from the island-in-the-sea composite fibers of the non-woven fabric obtained by entangling the island-in-the-sea composite fibers, a non-woven fabric obtained by entangling ultrafine fibers is formed. As the method for removing the sea component polymer from the island-in-the-sea composite fibers, a conventionally known ultrafine fiber formation method such as a method in which the non-woven fabric obtained by entangling the island-in-the-sea composite fibers is treated with a solvent or decomposition agent capable of selectively removing only the sea component polymer can be used without any particular limitation. For example, in the case of using the water-soluble PVA as the sea component polymer, it is preferable to remove the water-soluble PVA by extraction until the removal rate of the water-soluble PVA becomes about 95 to 100 mass% by treating the non-woven fabric in hot water at 85 to 100°C for 100 to 600 seconds. Note that the water-soluble PVA can be efficiently removed by extraction by repeating dip-nipping.

The basis weight of the non-woven fabric thus obtained is preferably 140 to 3000 g/m$^2$, more preferably 200 to 2000 g/m$^2$.

By buffing one or both surfaces of the non-woven fabric into which the elastic polymer has been impregnated, an artificial leather substrate having a napped surface in which the ultrafine fibers on the surface layer have been napped is obtained. The buffing is performed using sandpaper or emery paper with a grit number of preferably about 120 to 600, more preferably about 320 to 600. Thus, an artificial leather substrate having a napped surface on which napped fibers are present on one or both surfaces is obtained.

Note that an elastic polymer capable of locally fixing the vicinity of a base of the napped fibers may be further applied into the napped surface of the artificial leather substrate, in order to inhibit the napped fibers from falling out, and to make them less likely to be raised by friction, thus improving the quality the of appearance. Specifically, for example, a solution or an emulsion containing the elastic polymer is applied onto the napped surface, follow by drying, to solidify the elastic polymer. By adding the elastic polymer capable of locally fixing the vicinity of the base of the napped fibers located on the napped surface, the vicinity of the base of the fibers located on the napped surface is constrained by the elastic polymer, thus making the fibers less likely to fall out. As the specific example of the elastic polymer that is applied into the napped surface, the same elastic polymers as those described above can be used.

The amount of the elastic polymer applied into the napped surface is preferably 1 to 10 g/m$^2$, more preferably 2 to 8 g/m$^2$, because the vicinity of the base of the fibers can be firmly fixed without making the napped surface too rigid. Note that the content of the applied elastic polymer capable of fixing the vicinity of the base also constitutes a part of the content (B) of the elastic polymer.

The artificial leather substrate having a napped surface may be further subjected to a shrinkage processing treatment or a flexibilizing treatment by crumpling to adjust the texture, or a finishing treatment such as a reverse seal brushing treatment, an antifouling treatment, a hydrophilization treatment, a lubricant treatment, a softener treatment, an antioxidant treatment, an ultraviolet absorber treatment, a fluorescent agent treatment and a flame retardant treatment.

The artificial leather substrate having a napped surface is dyed, and thus is finished into a napped artificial leather. As the dye, a suitable dye is selected as appropriate according to the type of the fibers. For example, when the fibers are made from a polyester-based resin, it is preferable that the artificial leather substrate is dyed with a disperse dye or a cation dye. Specific examples of the disperse dye include benzene azo-based dyes (e.g., monoazo and disazo), heterocyclic azo-based dyes (e.g., thiazole azo, benzothiazole azo, quinoline azo, pyridine azo, imidazole azo, and thiophene azo), anthraquinone-based dyes, and condensate-based dyes (e.g., quinophthalone, styryl, and coumarin). These are commercially available as dyes with the prefix "Disperse", for example. These may be used alone or in a combination of two or more. As the dyeing method, it is possible to use a high-pressure jet dyeing method, a jigger dyeing method, a thermosol continuous dyeing machine method, a dyeing method using a sublimation printing process, and the like, without any particular limitation.

The apparent density of the napped artificial leather is preferably 0.4 to 0.7 g/cm$^3$, more preferably 0.45 to 0.6 g/cm$^3$, because a napped artificial leather that is well-balanced in the fullness and the flexible texture that does not cause sharp bending can be obtained. When the apparent density of the napped artificial leather is too low, sharp bending tends to occur due to a low level of fullness. Further, the fibers tend to be easily pulled out by rubbing the napped surface, resulting in an appearance with low quality. On the other hand, when the apparent density of the napped artificial leather is too high, the flexible texture tends to be reduced.

The napped artificial leather according to the present embodiment includes a non-woven fabric obtained by entangling fibers, the non-woven fabric having an abrasion loss (C) of 45 mg or less, in accordance with JIS L 1096 (6.17.5E method, Martindale method) under a pressing load of 12 kPa (gf/cm$^2$) after 20000 abrasion cycles. The non-woven fabric obtained by entangling fibers and having such abrasion resistance can be achieved by adjusting the fineness of the fibers, the type of the fibers, and the degree of entanglement of the fibers.

The abrasion loss (C) after 20000 abrasion cycles is 45 mg or less, preferably 40 mg or less, more preferably 35 mg or less, particularly preferably 30 mg or less, because a napped artificial leather having excellent abrasion resistance can be particularly easily obtained. Note that the lower limit of the abrasion loss (C) after 20000 abrasion cycles is preferably, but is not particularly limited to, about 5 mg.

The napped artificial leather according to the present embodiment contains the elastic polymer such that the 100% modulus (A) of the elastic polymer and the content (B) of the elastic polymer satisfy the relational expression: $B \geq - 1.8A + 40, A > 0$. When the napped artificial leather contains the elastic polymer in this manner, and the abrasion loss (C) after 20000 abrasion cycles of the non-woven fabric is 45 mg or less, a napped artificial leather having both a flexible texture and high abrasion resistance can be obtained. Specifically, it is possible to obtain a napped artificial leather that has both an abrasion loss of preferably 50 mg or less, more preferably 40 mg or less, in accordance with JIS L 1096 (6.17.5E method, Martindale method) under a pressing load of 12 kPa ($gf/cm^2$) after 50000 abrasion cycles, and suppleness with a softness of preferably 3.5 mm or more, more preferably 3.7 mm or more, as measured using a softness tester.

[EXAMPLES]

Hereinafter, the present invention will be described more specifically by way of examples. It should be noted that the scope of the present invention is not to be construed as being limited to the examples.

First, the evaluation methods used in the present examples will be collectively described below.

(Measurement of Content (B) of Elastic Polymer)

First, the weight of a napped artificial leather was measured. Then, the napped artificial leather was immersed in N,N'-dimethylformamide (DMF) for 12 hours, followed by pressing, and then was further immersed in DMF for 5 minutes, followed by pressing. This series of operations was repeated five times, whereby the polyurethane serving as the elastic polymer was extracted with the solvent. Then, the non-woven fabric that had been subjected to the extraction was dried. Then, the weight of the dried non-woven fabric was measured. Then, the content (B) (mass%) of the elastic polymer was calculated from (Weight of napped artificial leather - Weight of non-woven fabric)/Weight of napped artificial leather $\times$ 100.

(Abrasion Loss (C) of Non-woven Fabric)

The napped artificial leather was immersed in DMF for 12 hours, followed by pressing, and then was further immersed in DMF for 5 minutes, followed by pressing. This series of operations was repeated five times, whereby the polyurethane was extracted with the solvent. Then, the non-woven fabric that had been subjected to the extraction was dried. Then, the abrasion loss (C) of the resulting non-woven fabric was measured by subjecting the non-woven fabric to an abrasion test in accordance with JIS L 1096 (6.17.5E method, Martindale method) under a pressing load of 12 kPa ($gf/cm^2$) for 20000 abrasion cycles, using a Martindale abrasion tester.

(Measurement of 100% Modulus (A) of Elastic Polymer)

Films having a thickness of about 400 $\mu$m of the polyurethanes used in Examples and Comparative Examples were formed, and the strength and elongation of a piece of each of the films that had been cut to have a width of 2.5 cm was measured using an autograph. The strength of the obtained SS curve at an elongation of 100% was read, and the 100% modulus (A: MPa) was calculated by dividing the read value by the cross-sectional area obtained based on the film thickness and a width of 2.5 cm.

(Softness)

The softness was measured using a softness tester (leather softness measuring instrument ST 300, manufactured by MSA Engineering Systems Limited of the United Kingdom). Specifically, a predetermined ring with a diameter of 25 mm was set on a lower holder of the instrument, and thereafter, the napped artificial leather was set on the lower holder. Then, a metal pin (diameter: 5 mm) fixed to an upper lever was pressed down toward the napped artificial leather. Then, the upper lever was pressed down, and the value at the time when the upper lever was locked was read. Note that the value indicated the penetration depth, and a larger value indicated higher suppleness.

(Abrasion Loss of Napped Artificial Leather)

The abrasion loss of the napped artificial leather was measured by subjecting the napped artificial leather to an abrasion test in accordance with JIS L 1096 (6.17.5E method, Martindale method) under a pressing load of 12 kPa ($gf/cm^2$) for 50000 abrasion cycles, using a Martindale abrasion tester.

[Example 1]

A water-soluble polyvinyl alcohol resin (PVA: sea component) and an isophthalic acid-modified polyethylene terephthalate (island component) having a degree of modification of 6 mol% were discharged from a multicomponent fiber melt-spinning spinneret (number of island: 12/fiber) at 260°C at a throughput per hole of 1.5 g/min such that the sea component/the island component was 25/75 (mass ratio). Then, the ejector pressure was adjusted such that the spinning rate was 3700 m/min, and filaments having an average fineness of 4.5 dtex were collected on a net, to obtain a spunbonded sheet (fiber web).

Layers of the obtained fiber web were stacked by cross wrapping so as to have a total basis weight of 497 g/m$^2$, to obtain a superposed body, and an oil for preventing the needle from breaking was sprayed thereto. Next, the superposed body was needle-punched using 1-barb 42-gauge needles and 6-barb 42-gauge needles at 4189 punch/cm$^2$, to achieve entanglement, and thereby to obtain a web entangled sheet. The web entangled sheet had a basis weight of 626 g/m$^2$ and a delamination strength of 11.4 kg/2.5 cm. The area shrinkage due to the needle punching was 20.6%.

Next, the web entangled sheet was subjected to a steam treatment at 110°C and 23.5% RH. Then, the web entangled sheet was dried in an oven at 90 to 110°C, and was thereafter further hot-pressed at 115°C, and thereby to obtain a heat-shrunk web entangled sheet having a basis weight of 1043 g/m$^2$, a specific gravity of 0.43 g/cm$^3$, and a thickness of 2.43 mm.

Next, the heat-shrunk web entangled sheet was impregnated with a DMF solution (solid content 18%) of a polyurethane that was a polycarbonate-based non-yellowing resin having a 100% modulus of 12.5 MPa such that the content (B) of the elastic polymer (polyurethane) was about 39 mass%. Thereafter, the web entangled sheet was immersed in a 30% aqueous DMF solution at 40°C to solidify the polyurethane. Next, the web entangled sheet into which the polyurethane had been applied was immersed in hot water at 95°C for 10 minutes while being subjected to nipping and high-pressure water jetting, to remove the PVA by dissolution, and was further dried, to obtain a fiber base material having a single fiber fineness of 0.3 dtex, a basis weight of 1053 g/m$^2$, a specific gravity of 0.451 g/cm$^3$, and a thickness of 1.85 mm, as a composite of the polyurethane and the non-woven fabric, which was an entangle body of fiber bundles of filaments of ultrafine fibers.

Next, after the fiber base material had been sliced in half, a DMF solution (solid content 35%) of the polyurethane was applied to the surface of the fiber base material, and was dried to bind the fibers on the surface to each other. Thereafter, both surfaces of the fiber base material were ground at a speed of 3.0 m/min and a rotation rate of 650 rpm, using a paper with a grit number of 120 for the back surface, and papers with grit numbers of 240, 320, and 600 for the front surface, to obtain an artificial leather substrate having a napped surface. Thereafter, the artificial leather substrate was dyed by high-pressure dyeing at 120°C, using a disperse dye, to obtain a suede-like artificial leather having a basis weight of 370 g/m$^2$, an apparent density of 0.451 g/cm$^3$, and a thickness of 0.82 mm. Then, the suede-like artificial leather was evaluated according to the above-described evaluation methods. The results are shown in Table 1.

[Table 1]

| Example No. | A | B | -1.8A + 40 | C | MD 50000 cycles | Softness |
|---|---|---|---|---|---|---|
|  | (MPa) | (%) |  | (mg) | (mg) | (mm) |
| Example 1 | 12.5 | 38.9 | 17.5 | 18.9 | 35.7 | 4.3 |
| Example 2 | 12.5 | 24.6 | 17.5 | 18.6 | 38.2 | 4.3 |
| Example 3 | 12.5 | 45 | 17.5 | 18.0 | 28.5 | 3.9 |
| Example 4 | 10 | 22 | 22 | 19.3 | 49.8 | 4.5 |
| Example 5 | 4.5 | 41.2 | 31.9 | 20.0 | 48.3 | 4.2 |
| Example 6 | 6 | 30 | 29.2 | 18.2 | 49.0 | 4.3 |
| Example 7 | 8 | 28 | 25.6 | 18.5 | 46.1 | 4.3 |
| Com. Ex. 1 | 4.5 | 20.7 | 31.9 | 18.9 | 72.7 | 4.5 |
| Com. Ex. 2 | 12.5 | 16 | 17.5 | 18.0 | 55.6 | 4.4 |
| Com. Ex. 3 | 12.5 | 5 | 17.5 | 18.5 | 58.2 | 4.8 |
| Com. Ex. 4 | 8 | 20 | 25.6 | 18.3 | 64.5 | 4.6 |
| Example 8 | 12.5 | 37 | 17.5 | 40.7 | 39.4 | 4.3 |
| Example 9 | 12.5 | 23.5 | 17.5 | 43.3 | 46.8 | 4.4 |

(continued)

| Example No. | A (MPa) | B (%) | -1.8A + 40 | C (mg) | MD 50000 cycles (mg) | Softness (mm) |
|---|---|---|---|---|---|---|
| Example 10 | 12.5 | 46 | 17.5 | 39.9 | 33.5 | 3.8 |
| Example 11 | 4.5 | 43.2 | 31.9 | 41.2 | 49.1 | 4.3 |
| Com. Ex. 5 | 4.5 | 19.3 | 31.9 | 42.4 | 74.2 | 4.5 |
| Com. Ex. 6 | 12.5 | 15.3 | 17.5 | 41.7 | 57.0 | 4.3 |
| Com. Ex. 7 | 12.5 | 6.1 | 17.5 | 43.0 | 59.7 | 4.7 |
| Com. Ex. 8 | 12.5 | 35.1 | 17.5 | 48.3 | 52.0 | 4.2 |
| Com. Ex. 9 | 12.5 | 26.9 | 17.5 | 49.0 | 56.2 | 4.5 |
| Com. Ex. 10 | 12.5 | 44.1 | 17.5 | 47.8 | 50.5 | 3.8 |
| Com. Ex. 11 | 4.5 | 41.2 | 31.9 | 48.8 | 52.7 | 4.1 |
| Com. Ex. 12 | 4.2 | 31.5 | 32.4 | 48.3 | 66.5 | 4.5 |

[Examples 2 to 3, Comparative Examples 2 to 3]

Suede-like artificial leathers were obtained in the same manner as in Example 1 except that the ratio of the DMF solution of the polyurethane impregnated into the heat-shrunk web entangled sheet in Example 1 was changed as shown in Table 1. Then, the suede-like artificial leathers were evaluated according to the above-described evaluation methods. The results are shown in Table 1.

[Examples 4 to 7, Comparative Example 1, Comparative Example 4]

Suede-like artificial leathers were obtained in the same manner as in Example 1 except that a DMF solution of a polyurethane having a 100% modulus of 4.5 MPa (Example 5, Comparative Example 1), a DMF solution of a polyurethane having a 100% modulus of 6 MPa (Example 6), a DMF solution of a polyurethane having a 100% modulus of 8 MPa (Example 7, Comparative Example 4), or a DMF solution of a polyurethane having a 100% modulus of 10 MPa (Example 4) was used in place of the DMF solution of the polyurethane having a 100% modulus of 12.5 MPa used in Example 1, and that the ratio of each of the DMF solutions of the polyurethanes impregnated into the heat-shrunk web entangled sheets was changed. Then, the suede-like artificial leathers were evaluated according to the above-described evaluation methods. The results are shown in Table 1.

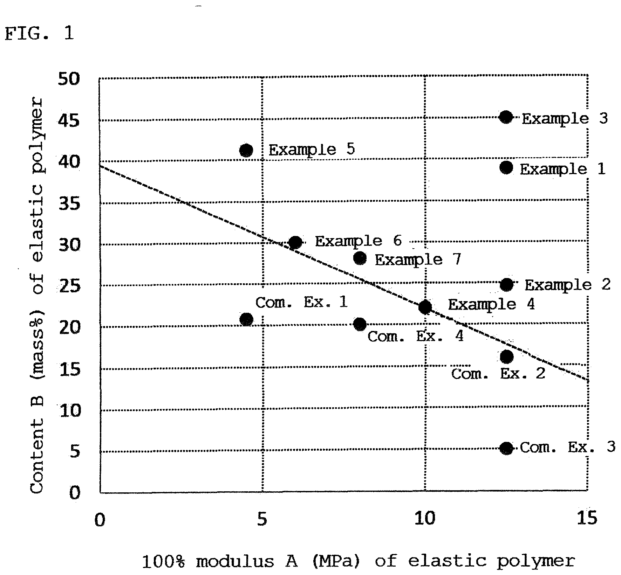

FIG. 1 shows a graph plotting the relationship between the 100% modulus (A) of the elastic polymer and the content (B) of the elastic polymer for the napped artificial leathers obtained in Examples 1 to 7 and Comparative Examples 1 to 4. The abrasion losses (C) of the non-woven fabrics in the napped artificial leathers obtained in Examples 1 to 7 and Comparative Examples 1 to 4 were about 18 to 20 mg. Also, as shown in FIG. 1, the napped artificial leathers obtained in Examples 1 to 7, in which the 100% modulus (A) of the elastic polymer and the content (B) of the elastic polymer satisfied the relational expression: B ≥ -1.8A + 40, A > 0, had both high abrasion resistance with an abrasion loss after 50000 abrasion cycles of 50 mg or less and a flexible texture with a softness of 3.5 mm or more, as measured using a softness tester, as shown in Table 1. On the other hand, the napped artificial leathers obtained in Comparative Examples 1 to 4, in which the relational expression: B ≥ -1.8A + 40, A > 0 was not satisfied, had inferior abrasion resistance.

[Example 8]

PVA (sea component) and an isophthalic acid-modified polyethylene terephthalate (island component) having a degree of modification of 6 mol% and containing 1.5 mass% of carbon black were discharged from a multicomponent fiber melt-spinning spinneret (number of island: 12/fiber) at 260°C at a throughput per hole of 1.2 g/min such that the sea component/the island component was 25/75 (mass ratio). Then, the ejector pressure was adjusted such that the spinning rate was 3700 m/min, and filaments having an average fineness of 3.6 dtex were collected on a net, to obtain a spunbonded sheet (fiber web). Then, layers of the obtained fiber web were stacked by cross wrapping so as to have a total basis weight of 528 g/m$^2$, to obtain a superposed body, and an oil for preventing the needle from breaking was sprayed thereto. Next, the superposed body was needle-punched using 1-barb 42-gauge needles and 6-barb 42-gauge needles at 4189 punch/cm$^2$, to achieve entanglement, and thereby to obtain a web entangled sheet. The web entangled sheet had a basis weight of 635 g/m$^2$ and a delamination strength of 9.0 kg/2.5 cm. The area shrinkage due to the needle punching was 16.8%.

A suede-like artificial leather was obtained in the same manner as in Example 1 except that the above-described web entangled sheet was used in place of the web entangled sheet used in Example 1. The obtained suede-like artificial leather included a non-woven fabric including fibers having a single fiber fineness of 0.25 dtex, and had a basis weight of 365 g/m$^2$, an apparent density of 0.456 g/cm$^3$, and a thickness of 0.80 mm.

Then, the suede-like artificial leather was evaluated according to the above-described evaluation methods. The results are shown in Table 1.

[Examples 9 to 11, Comparative Examples 5 to 7]

Suede-like artificial leathers were obtained in the same manner as in Example 1 except that the ratio and the type of the DMF solution of the polyurethane impregnated into the heat-shrunk web entangled sheet in Example 8 were changed as shown in Table 1. Then, the suede-like artificial leathers were evaluated according to the above-described evaluation methods. The results are shown in Table 1.

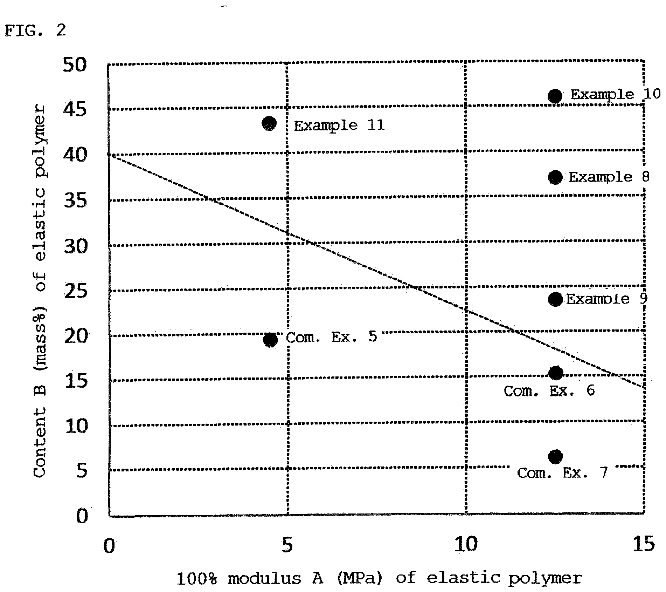

FIG. 2 shows a graph plotting the relationship between the 100% modulus (A) of the elastic polymer and the content (B) of the elastic polymer for the napped artificial leathers obtained in Examples 8 to 11 and Comparative Examples 5 to 7. The abrasion losses (C) of the non-woven fabrics in the napped artificial leathers obtained in Examples 8 to 11 and Comparative Examples 5 to 7 were 39.9 to 43.3 mg. Also, the napped artificial leathers obtained in Examples 8 to 11, in which the 100% modulus (A) of the elastic polymer and the content (B) of the elastic polymer satisfied the relational expression: $B \geq -1.8A + 40, 4 \leq A \leq 15, A > 0$, had both a flexible texture and high abrasion resistance as shown in Table 1. On the other hand, the napped artificial leathers obtained in Comparative Examples 5 to 7, in which the relational expression: $B \geq -1.8A + 40, 4 \leq A \leq 15, A > 0$ was not satisfied, had inferior abrasion resistance.

[Comparative Example 8]

A polyethylene (sea component) and an isophthalic acid-modified polyethylene terephthalate (island component) having a degree of modification of 6 mol% were discharged from a multicomponent fiber melt-spinning spinneret (number of island: 12/fiber) at 270°C at a throughput per hole of 1.2 g/min such that the sea component/the island component was 50/50 (mass ratio). Then, the ejector pressure was adjusted such that the spinning rate was 3700 m/min, and filaments having an average fineness of 3.6 dtex were collected on a net, to obtain a spunbonded sheet (fiber web).

Layers of the obtained fiber web were stacked by cross wrapping so as to have a total basis weight of 497 g/m$^2$, to obtain a superposed body, and an oil for preventing the needle from breaking was sprayed thereto. Next, the superposed body was needle-punched using 1-barb 42-gauge needles and 6-barb 42-gauge needles at 2020 punch/cm$^2$, to achieve entanglement, and thereby to obtain a web entangled sheet. The web entangled sheet had a basis weight of 750 g/m$^2$ and a delamination strength of 9.4 kg/2.5 cm.

Next, the web entangled sheet was shrunk by being immersed in hot water at 90°C, and was further hot-pressed at 90°C, to obtain a heat-shrunk web entangled sheet having a basis weight of 1090 g/m$^2$, a specific gravity of 0.43 g/cm$^3$, and a thickness of 2.54 mm.

Next, the heat-shrunk web entangled sheet was impregnated with a DMF solution (solid content 18%) of a polyurethane that was a polycarbonate-based non-yellowing resin having a 100% modulus of 12.5 MPa such that the content (B) of the elastic polymer was about 39%. Thereafter, the web entangled sheet was immersed in a 30% aqueous DMF solution at 40°C for solidification. Next, a treatment for immersing the web entangled sheet filled with the polyurethane in toluene and pressing the web entangled sheet was repeated multiple times to remove the polyethylene by dissolution, and the web entangled sheet was further dried, to obtain a fiber base material having a single fiber fineness of 0.15 dtex, a basis weight of 865 g/m$^2$, a specific gravity of 0.43 g/cm$^3$, and a thickness of 2.01 mm, as a composite of the polyurethane and the non-woven fabric, which was an entangle body of fiber bundles of filaments of ultrafine fibers.

Next, after the fiber base material had been sliced in half, a DMF solution (solid content 35%) of the polyurethane was applied onto the surface of the fiber base material, and was dried to bind the fibers on the surface to each other. Thereafter, both surfaces of the fiber base material were ground at a speed of 3.0 m/min and a rotation rate of 650 rpm, using a paper with a grit number of 120 for the back surface, and papers with grit numbers of 240, 320, and 600 for the front surface, to obtain an artificial leather substrate. Thereafter, the artificial leather substrate was dyed by high-pressure dyeing at 120°C, using a disperse dye, to obtain a suede-like artificial leather having a basis weight of 336 g/m$^2$, a specific gravity of 0.42 g/cm$^3$, and a thickness of 0.80 mm. Then, the suede-like artificial leather was evaluated according to the above-described evaluation methods. The results are shown in Table 1.

[Comparative Examples 9 to 12]

Suede-like artificial leathers were obtained in the same manner as in Example 1 except that the ratio and the type of the DMF solution of the polyurethane impregnated into the heat-shrunk web entangled sheet in Comparative Example 8 were changed as shown in Table 1. Then, the suede-like artificial leathers were evaluated according to the above-described evaluation methods. The results are shown in Table 1.

All of the abrasion losses (C) of the non-woven fabrics in the napped artificial leathers obtained in Comparative Examples 8 to 12 were 47.8 to 49 mg. Also, the napped artificial leathers obtained in Comparative Examples 8 to 11, in which the 100% modulus (A) of the elastic polymer and the content (B) of the elastic polymer satisfied the relational expression: $B \geq -1.8A + 40$, $A > 0$, and the napped artificial leather obtained in Comparative Example 12, in which the relational expression: $B \geq -1.8A + 40$, $A > 0$ was not satisfied, all had inferior abrasion resistance.

[Industrial Applicability]

A napped artificial leather obtained according to the present invention can be suitably used as a skin material for clothing, shoes, articles of furniture, car seats, and general merchandise.

**Claims**

1. A napped artificial leather comprising:

    a non-woven fabric that is an entangle body of fibers; and
    an elastic polymer that has been applied into the non-woven fabric,
    wherein at least one surface of the napped artificial leather is a napped surface formed by napping the fibers,
    a 100% modulus (A) of the elastic polymer and a content (mass%) (B) of the elastic polymer satisfy the relational expression:

$$B \geq -1.8A + 40, \ A > 0,$$

    and
    the non-woven fabric has an abrasion loss (C) of 45 mg or less, in accordance with JIS L 1096 (6.17.5E method, Martindale method) under a pressing load of 12 kPa (gf/cm$^2$) after 20000 abrasion cycles.

2. The napped artificial leather according to claim 1, wherein $4 \leq A \leq 15$.

3. The napped artificial leather according to claim 1 or 2, wherein $13 \leq B \leq 50$.

4. The napped artificial leather according to any one of claims 1 to 3, wherein the elastic polymer is a solvent-based polyurethane.

5. The napped artificial leather according to any one of claims 1 to 4, wherein the non-woven fabric includes ultrafine fibers having an average fineness of 0.05 to 1.0 dtex.

6. The napped artificial leather according to any one of claims 1 to 5, wherein a portion of the elastic polymer is locally fixed to the vicinity of a base of the fibers that have been napped.

7. The napped artificial leather according to any one of claims 1 to 6, wherein the fibers contain carbon black.

8. The napped artificial leather according to any one of claims 1 to 7, wherein the napped artificial leather has an abrasion loss of 50 mg or less, in accordance with JIS L 1096 (6.17.5E method, Martindale method) under a pressing load of 12 kPa (gf/cm$^2$) after 50000 abrasion cycles, and a softness of 3.5 mm or more, as measured using a softness tester.

FIG. 1

FIG. 2

EP 3 708 708 A1

**EP 3 708 708 A1**

## INTERNATIONAL SEARCH REPORT

| International application No. |
| --- |
| PCT/JP2018/032292 |

**A. CLASSIFICATION OF SUBJECT MATTER**
Int.Cl. D06N3/00(2006.01)i

According to International Patent Classification (IPC) or to both national classification and IPC

**B. FIELDS SEARCHED**

Minimum documentation searched (classification system followed by classification symbols)
Int.Cl. D06N1/00-7/06, B32B1/00-B32B43/00

Documentation searched other than minimum documentation to the extent that such documents are included in the fields searched

| | | |
| --- | --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | JP 2004-143654 A (KURARAY CO., LTD.) 20 May 2004, claims, paragraphs [0001], [0011], [0015], [0016], [0019], [0022], [0047], [0054], [0055], [0058], [0064], [0075]-[0083], [0093], [0095]<br>& US 2004/0063366 A1, claims, paragraphs [0002], [0018], [0037]-[0039], [0044]-[0046], [0052], [0053], [0097]-[0099], [0124], [0134], [0135], [0156]-[0164], [0174], [0176] & EP 1403421 A2 & CN 1497098 A & KR 10-2004-0029264 A | 1-3, 5-8<br>6-7 |

☒ Further documents are listed in the continuation of Box C. ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 29.10.2018 | 13.11.2018 |

| Name and mailing address of the ISA/ | Authorized officer |
| --- | --- |
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.

PCT/JP2018/032292

C (Continuation).   DOCUMENTS CONSIDERED TO BE RELEVANT

| Category* | Citation of document, with indication, where appropriate, of the relevant passages | Relevant to claim No. |
|---|---|---|
| X<br>Y | WO 2007/040144 A1 (KURARAY CO., LTD.) 12 April 2007, claims, paragraphs [0001], [0010], [0013], [0015], [0037], [0043], [0044], [0046], [0083], [0084], [0088], [0091]-[0093], [0098], [0099], [0102], [0104], [0110]<br>& US 2009/0274862 A1, claims, paragraphs [0001], [0013], [0016], [0018], [0041], [0047], [0048], [0050], [0109], [0110], [0120], [0121], [0129]-[0131], [0143], [0144], [0147], [0149]-[0156], [0169] & EP 1930495 A1 & CN 101273168 A & KR 10-2008-0049076 A | 1-3, 5-8<br>6-7 |
| X<br>Y | JP 2004-204358 A (KURARAY CO., LTD.) 22 July 2004, claims, paragraphs [0001], [0005], [0006], [0014], [0026], [0027], [0029], [0034]-[0038]<br>(Family: none) | 1-4, 6, 8<br>7 |
| A | JP 49-10632 B1 (TORAY INDUSTRIES, INC.) 12 March 1974, entire text<br>(Family: none) | 1-8 |
| A | JP 2014-25165 A (TORAY INDUSTRIES, INC.) 06 February 2014, entire text<br>(Family: none) | 1-8 |
| A | JP 2001-19735 A (TEIJIN LTD.) 23 January 2001, entire text<br>(Family: none) | 1-8 |
| A | JP 2011-42896 A (NICCA CHEMICAL CO., LTD.) 03 March 2011, entire text<br>& CN 101994263 A & KR 10-2011-0019712 A | 1-8 |
| A | JP 11-269735 A (KURARAY CO., LTD.) 05 October 1999, entire text<br>(Family: none) | 1-8 |
| A | JP 2016-11477 A (TORAY INDUSTRIES, INC.) 21 January 2016, entire text<br>(Family: none) | 1-8 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S5175178 B
- JP H06316877 B
- JP 2001081677 A